# EUROPEAN PATENT SPECIFICATION

(11) **EP 3 702 682 B1**
(45) Date of publication and mention of the grant of the patent: **13.12.2023**
(21) Application number: 20157698.0
(22) Date of filing: 17.02.2020
(51) Int. Cl.: F24D 3/10, F16K 11/02, F16K 11/044, F16K 11/07, F24D 19/10

(54) **HYDRAULIC SYSTEM FOR AN INSTALLATION FOR HEATING AND GENERATING DOMESTIC HOT WATER**
HYDRAULIKSYSTEM FÜR EINE ANLAGE FÜR HEIZUNG UND WARMWASSERVERSORGUNG FÜR HAUSHALTE
SYSTÈME HYDRAULIQUE POUR UNE INSTALLATION DE CHAUFFAGE ET DE PRODUCTION D'EAU CHAUDE DOMESTIQUE

(30) Priority: 20.02.2019 IT 201900002455
(43) Date of publication of application: 02.09.2020
(73) Proprietor: ELBI International S.p.A., 10129 Torino (IT)
(72) Inventor: MAGNONE, Luca, I-10025 PINO TORINESE (Torino) (IT); AITA, Luigi, I-10090 GASSINO TORINESE (Torino) (IT)
(74) Representative: Vanzini, Christian

(56) References cited:
- EP-A1- 3 150 923
- DE-A1- 19 632 605
- DE-A1-102011 113 360
- DE-U1- 29 611 808
- US-A- 3 845 777

## Description

The present invention concerns in general hydraulic systems that are arranged to distribute the water flows between different circuits of a system, particularly in installations for heating and generating domestic hot water.

It is known that, in the aforesaid installations, motorized three-way valves are used to selectively direct water to various heat exchangers through different hydraulic circuits.

New solutions have recently been proposed that provide for the use of non-motorized three-way valves, which switch between different positions according to the pressure produced by the circulation pump. DE 19632605 A1 discloses a hydraulic system comprising a three-way valve responsive to pressure of the pump on the on and off positions. EP 3150923 A1 discloses a hydraulic system comprising a three-way valve responsive to different speeds of the pump. DE 29611808 U1 discloses a motorized three-way valve. DE 102011113360 A1 discloses a bistable flow valve.

An object of the present invention is to make available a hydraulic system for diverting a flow of water from a primary exchanger to a secondary exchanger or heating circuit that operates without a motor, and therefore does not require electrical energy to drive it but rather is driven only by the hydraulic energy of the water flow, which is simple and reliable.

This and other objects are achieved according to the invention with a hydraulic system having the feature of claim 1 or claim 3.

According to the present invention it is therefore possible to direct the water into the different circuits of the heating system with a simple and reliable hydraulic system, which operates without a motor and therefore does not require electricity for its operation, being driven only by the hydraulic energy of the water flow.

With such a system the cost of the valve and the cost of the electrical/electronic control part of the valve are further reduced. Hydraulic performance is also improved and water hammering is avoided.

According to the invention, the three-way valve further comprises return means associated with the movable support, which produce an elastic force to bias the movable support towards an intermediate position between the opposed seats of the three-way valve, wherein this intermediate position is associated with the off-state of the circulation pump.

In particular, when the obstructing member is engaged against one of said opposed seats of the three-way valve, said movable support is movable towards said seat against the action of said elastic force due to pressure when the circulation pump switches from the off-state to the on-state.

Moreover, said movable support may be capable of driving the obstructing member from one to the other of said opposed seats of the three-way valve due to said elastic force when the circulation pump switches from the on-state to the off-state.

According to the invention as defined by claim 1, the movable support is arranged to be slidable between the opposed seats of the three-way valve and the obstructing member is made as a flexible conical ring arranged around the movable support.

In this case, when the obstructing member is engaged against one of said opposed seats of the three-way valve, said obstructing member is capable of overturning due to pressure when the circulation pump switches from the off-state to the on-state, as well as driving said movable support towards said seat against the action of said elastic force.

According to the invention as defined by claim 3, the movable support is arranged to be slidable between the opposed seats of the three-way valve, and the obstructing member is made as a ring arranged around the movable support and slidable with respect thereto.

In this case, when the obstructing member is engaged against one of said opposed seats of the three-way valve, said movable support is capable of moving due to pressure toward said seat and with respect to the obstructing member, against the action of said elastic force when the circulation pump switches from the off-state to the on-state.

Further features and advantages of the invention will become apparent from the detailed description that follows, provided by way of non-limiting example with reference to the accompanying drawings, wherein:
Figures 1a to 1c are partial schematic representations of different embodiments of an installation for heating and generating domestic hot water;
Figures 2-5 are cross-sectional views of a three-way valve according to the invention, in four different phases of an operating cycle;
Figures 6a and 6c-6e are cross-sectional views of a second embodiment of the three-way valve, in four different phases of an operating cycle;
Figure 6b is a perspective view of a movable support or shuttle of the three-way valve in Figures 6a and 6c-6e;
Figure 7 is a cross-sectional view of a variant of the three-way valve of Figure 6a;
Figure 8 is a perspective view of a movable support or shuttle of the three-way valve in Figure 7;
Figures 9 and 10 are cross-sectional views of further variants of the three-way valve in Figure 7;
Figures 11 and 12 are cross-sectional views of a further variant of the three-way valve in Figure 7, in two different operating positions;
Figure 13 is a cutaway view of the three-way valve in Figures 11 and 12;
Figures 14 to 16 are cross-sectional views of a further variant of the three-way valve in Figure 7, in a non-operating position and two different operating positions;
Figures 17a and 17b are simplified perspective views of a three-way valve not being part of the invention.

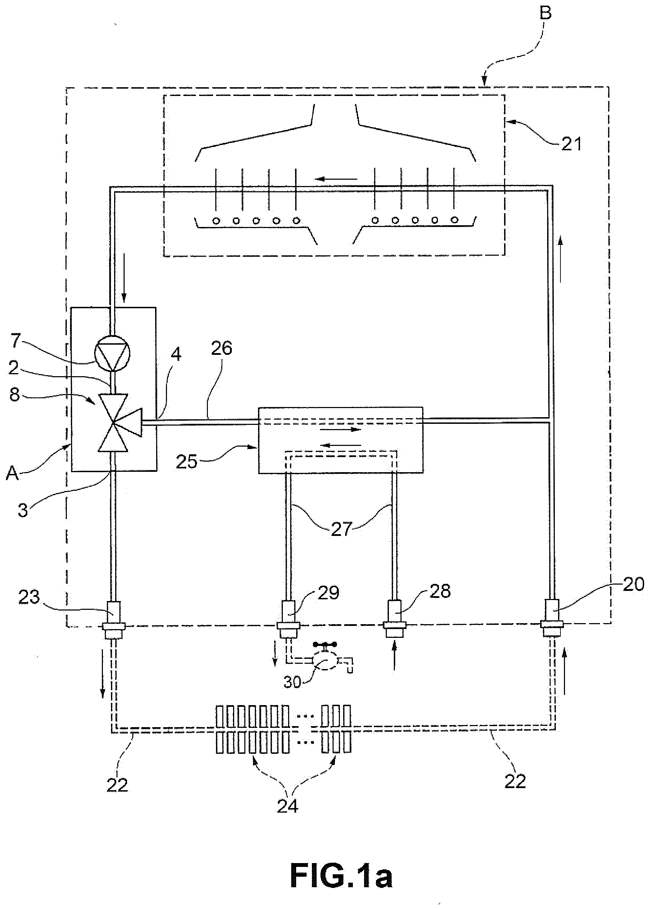

Figure 1a of the attached drawings schematically shows a heating appliance B of a type known per se, in particular a boiler, which comprises a hydraulic diversion system indicated collectively at A. In the following, reference will be made for convenience to a boiler, but it is understood that the invention may find application in any of the heating appliances normally used in installations for heating and generating domestic hot water.

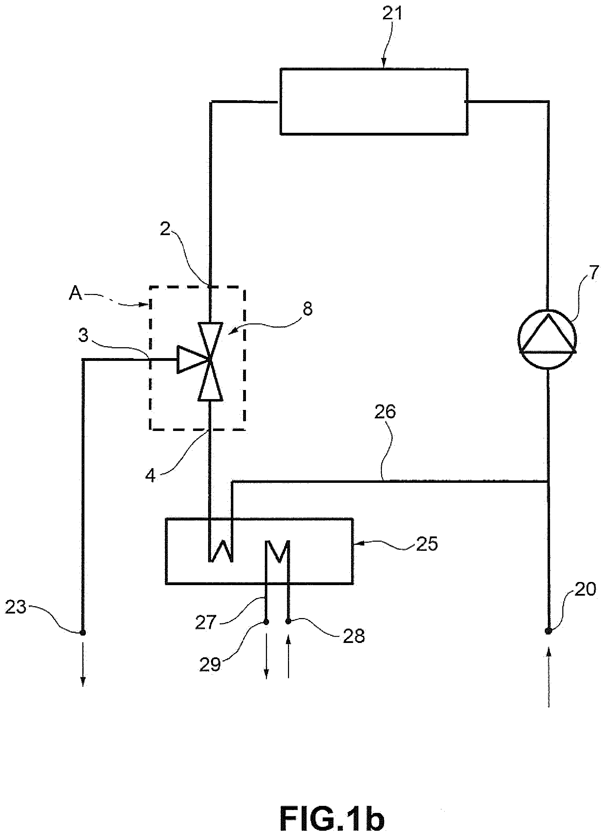

The system A is connected between an outlet fitting 23 of the boiler and a primary heat exchanger 21 intended to heat a flow of water for use in a hydraulic heating circuit comprising (for example) a pipeline 22 extending between the outlet fitting 23 and an inlet fitting 20 of the boiler, and along which are interposed one or more radiators 24. The boiler B further comprises a secondary heat exchanger 25, to transfer heat from a flow of water coming from the primary heat exchanger 21 and flowing in a pipe 26, to a flow of domestic water flowing in a pipeline 27 extending between two fittings 28, 29 of the boiler. The fitting 28 is intended to be connected to a water source, e.g. to the water supply network, and the fitting 29 may be connected to a tap 30 for domestic hot water. In some embodiments the boiler B does not comprise the secondary heat exchanger 25 which is arranged outside the boiler itself, but is connected to the primary heat exchanger 21 and to the hydraulic system A in a similar way as shown in Figure 1b. The diagram shown in Figure 1b may also be representative of the arrangement of the elements inside a boiler.

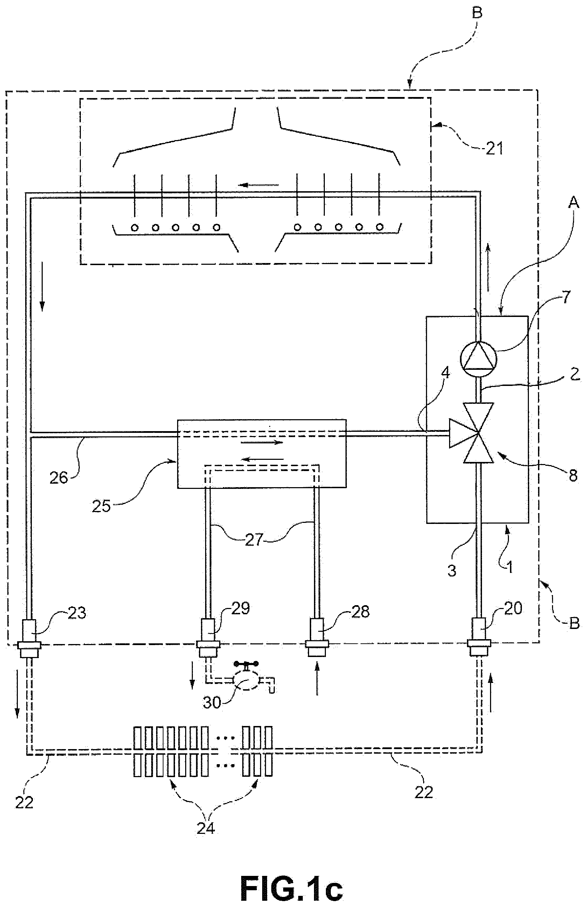

In the embodiment in Figures 1a and 1c, the hydraulic system A comprises a circulation pump 7 and a three-way valve 8 arranged hydraulically in series and assembled in a single body. According to different embodiments, the pump 7 may be arranged both upstream and downstream of the three-way valve 8 with respect to the flow of the fluid that passes through the pump 7. According to different embodiments, the pump 7 may be arranged and/or both upstream and downstream of the primary heat exchanger 21 with respect to the flow of the fluid that passes through the pump 7. According to different embodiments, the hydraulic system A does not necessarily integrate the pump 7 in a single body (Figure 1b); this pump 7 is however present inside the heating installation.

The three-way valve 8 comprises, in Figure 1, a first port 2, in the example a fluid inlet port, for connecting to the primary heat exchanger 21, a second port 3, in the example an outlet port, for connecting to the heating circuit 22, 24 through the fitting 23, and a third port 4, in the example a second outlet port, for connecting to the secondary heat exchanger 25.

With reference to Figure 1b, another embodiment of the heating and domestic hot water system is shown, in which there is no provision for a boiler as a stand-alone unit that encloses the individual components described above. In the embodiment shown in Figure 1b, elements corresponding to the preceding embodiment have been assigned the same numerical references. As may be seen in Figure 1b, the circulation pump 7 is arranged on the inlet side of the primary exchanger 21. In general, the primary exchanger 21 may, for example, be associated in a completely conventional way with a gas, wood or pellet burner, a heat pump, a solar cell, a district heating circuit.

With reference to Figure 1c, another embodiment of the installation for heating and domestic hot water is represented, in which the hydraulic system A is arranged on the inlet branch of the boiler B. In the embodiment shown in Figure 1c, elements corresponding to the embodiment in Figure 1a have been assigned the same numerical references. In this case, the order of arrangement of the circulation pump and three-way valve is reversed with respect to Figure 1a, and the three-way valve would have two inlets (second and third port) and one outlet (first port), with the circulation pump arranged in series with the outlet of the three-way valve.

The structure and operation of different embodiments of the three-way valve 8 shall now be described.

The three-way valve 8 is switchable between at least two positions in which the first port 2 is selectively in fluid communication with the second port 3 or with the third port 4, so that the water passing through the primary exchanger 21 is directed to the heating circuit 22, 24 or to the secondary exchanger 25 for heating the domestic water.

The three-way valve 8 is of the non-motorized type, and is responsive to the pressure applied by the circulation pump 7 at the first port 2 (inlet port, in the example in Figure 1a or 1b, or outlet port, in the example in Figure 1c), as will be clarified hereinafter.

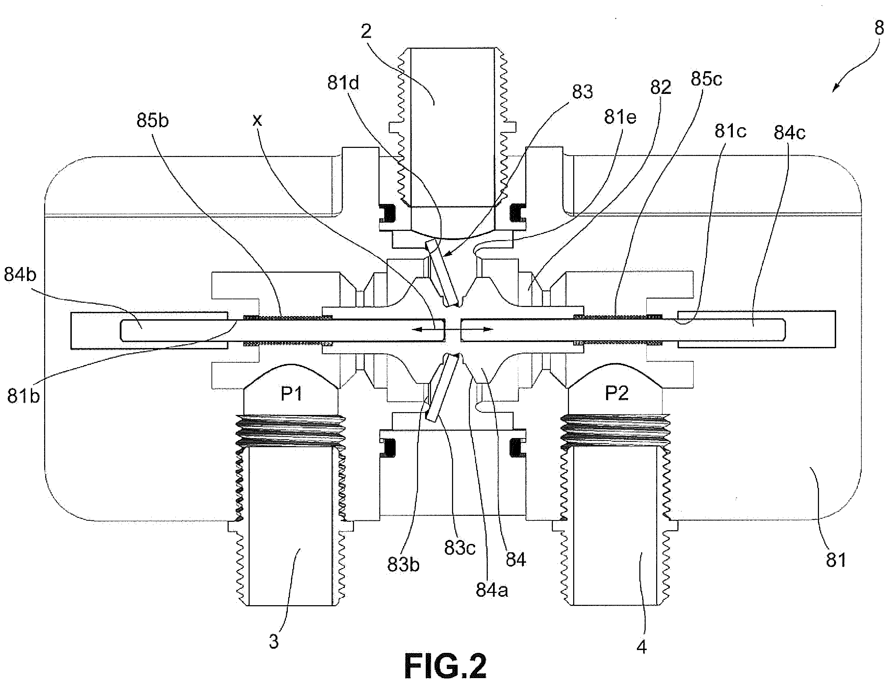

In this regard, reference is made to a first embodiment of the three-way valve, represented in Figures 2 to 5.

This three-way valve 8 comprises a valve body 81, in which are obtained the first port (inlet port) 2, the second port (first outlet port) 3 and the third port (second outlet port) 4, all of which are connected to a switching chamber 82 obtained in the valve body 81.

Inside the switching chamber 82 there is arranged an obstructing member 83 that takes the form of a flexible conical ring, which in turn is carried by a movable support 84 made as a sliding shuttle inside the valve body 81. The obstructing member 83 is made of a disc of flexible material (e.g. rubber) with a hole in the center, which, as a result of the difference in diameter between the hole of the disc and the larger diameter shaft of the movable support 84 on which it is mounted, assumes the shape of a flexible conical ring that is seen in Figure 2. The direction of translation of the movable support is represented by the arrow x in Figure 2. The obstructing member 83 has a first and second sealing surface 83b and 83c facing away from each other (i.e. facing in opposite and divergent directions), with respect to the direction of translation x of the movable support 84. The obstructing member 83 is mounted in a groove 84a obtained in the movable support 84, in such a way that the obstructing member 83 is integral in translation with the movable support 84. The configuration of the groove 84a is such as to allow the overturning of the obstructing member 83 (rotation at the point of contact with the movable support 84), i.e. the reversal of the taper direction with respect to the direction of translation x of the movable support 84, as will be clarified hereinafter.

At opposite ends, the movable support 84 is attached to guided rods 84b and 84c, which are inserted in corresponding guide holes 81b and 81c obtained in the valve body 81.

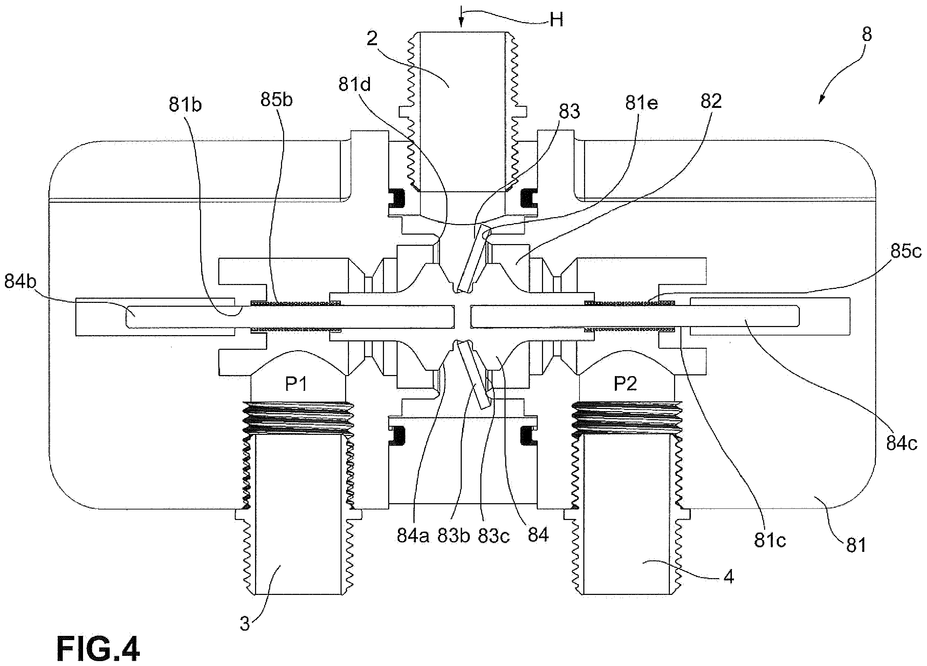

Between the ends of the movable support 84 and the respective counterparts of the valve body 81 are interposed respective opposed elastic means 85b and 85c, which bias the movable support 84 towards an intermediate position or equilibrium position, represented in Figures 2 and 4, which occurs when the same pressure is applied in ports 2, 3 and 4 (i.e. circulation pump 7 switched off). In the example shown, the elastic means 85b and 85c are made as coil springs arranged coaxially to the guide rod 84b and to the guide rod 84c respectively.

Inside the switching chamber 82 there are further obtained a first and a second opposed valve seat 81d and 81e, interposed between the first port 2 and the second port 3, and between the first port 2 and the third port 4 respectively. The valve seats 81d and 81e are suitable to be engaged reciprocatingly by the first sealing surface 83b and by the second sealing surface 83c of the obstructing member 83, respectively. The first port 2 is oriented orthogonally to the axis that joins the valve seats 81d and 81e.

In Figure 2, the three-way valve 8 is shown in a rest position, with the circulation pump 7 in an off-state. The movable support 84 is in the intermediate or rest position, with the first sealing surface 83b of the obstructing member 83 engaged against the first seat 81d. Therefore, the first port 2 is in fluid communication with the third port 4, while the fluid communication between the first port 2 and the second port 3 is interrupted. As the circulation pump 7 is switched off, the pressure P1 of the water at the second port 3 associated with the heating circuit 22, 24 is equal to the pressure P2 of the water at the third port 4 associated with the circuit of the secondary heat exchanger 25, which is equal to the pressure on the first port 2.

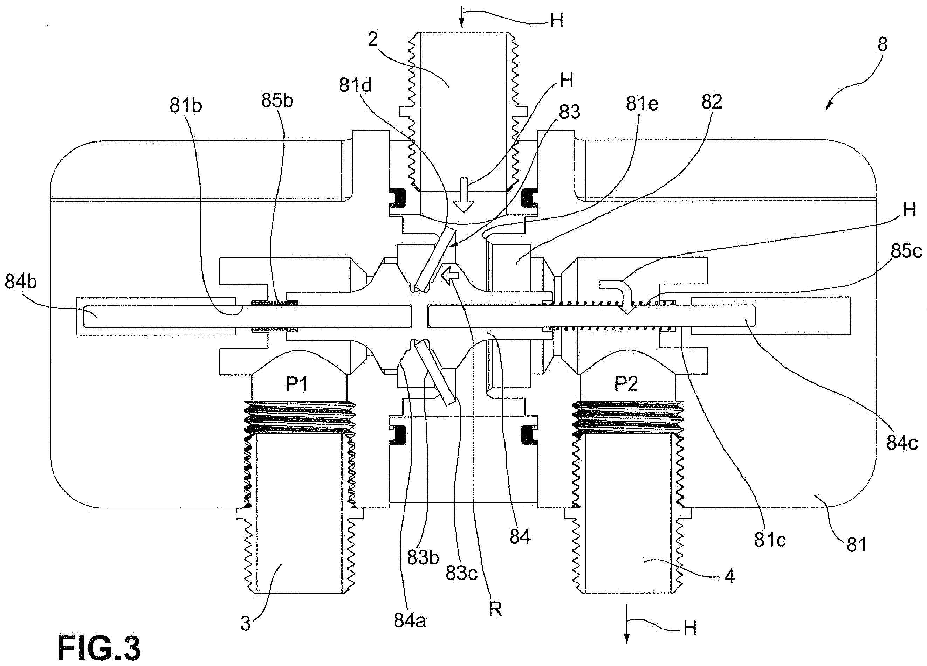

Figure 3 shows the next operating phase, when the circulation pump 7 is switched on. The pressure produced by the circulation pump 7 at the first port 2 acts on the exposed surface of the obstructing member 83, i.e. on the second sealing surface 83c and, since the first sealing surface 83b is resting against the first seat 81d, causes the overturning of the obstructing member 83 and the sealed closure of the first seat 81d. The overturning of the obstructing member 83 drives the movable support 84 towards the first seat 81d, against the action of the spring 85b which compresses, and the spring 85c which extends. As the circulation pump 7 is switched off, the pressure P2 of the water at the third port 4 associated with the circuit of the secondary heat exchanger 25 is greater than the pressure P1 of the water at the second port 3 associated with the heating circuit 22, 24. The arrows H in Figure 3 show the path of the water in the three-way valve 8, while the arrow R shows the overturning of the obstructing member 83 from the position indicated with the dashed line. The system may also operate with the first sealing surface 83b of the obstructing member 83 almost engaged against the first seat 81d (considering the state shown in Figure 2), i.e. with the first sealing surface 83b of the obstructing member 83 near the first seat 81d with the movable support 84 in the intermediate position. Turning on the circulation pump 7 will in effect tend in a first phase to bring the obstructing member 83 near to the first seat 81d, causing the system to go through the states described above.

Figure 4 show the third operating phase, when the circulation pump 7 is switched off again. Stopping the pump cancels the pressure difference between the two circuits, and thus the movable support 84 returns to the equilibrium position due to the return force exerted by the springs 85b and 85c. The movable support 84 drives with it the obstructing member 83, bringing the second sealing surface 83c into engagement against the second seat 81e. The obstructing member 83, having reversed its conicity in the previous operating phase, thus interrupts the fluid communication between the first port 2 and the third port 4, i.e. interrupts the circuit of the secondary exchanger 25. A fluid communication is instead established between the first port 2 and the second port 3. As the circulation pump 7 is switched off, the pressure P1 of the water at the second port 3 associated with the heating circuit 22, 24 is equal to the pressure P2 of the water at the third port 4 associated with the circuit of the secondary heat exchanger 25.

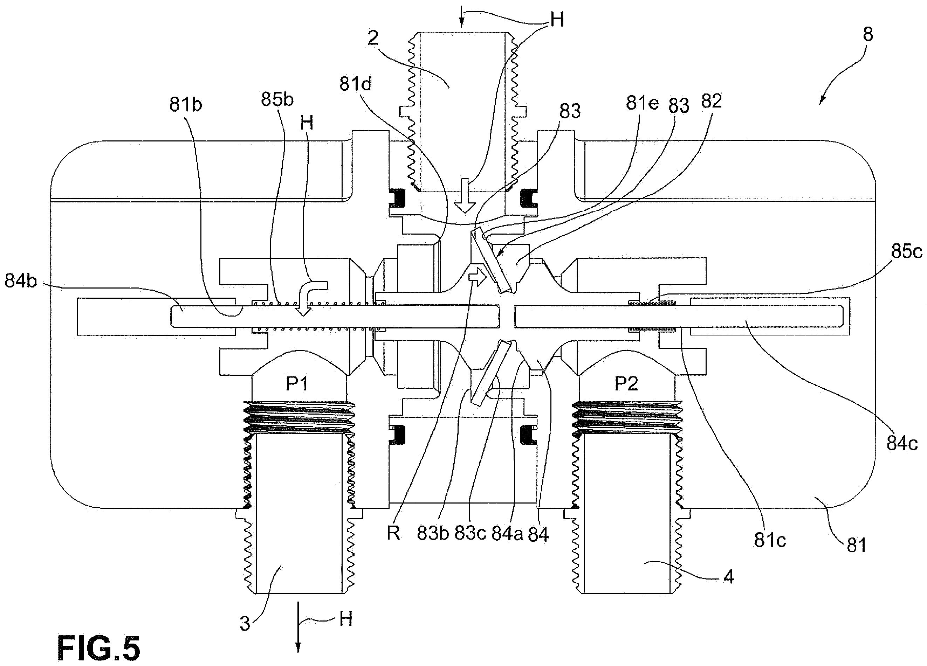

Figure 5 shows the fourth operating phase, when the circulation pump 7 is switched on again. The pressure produced by the circulation pump 7 at the first port 2 acts on the exposed surface of the obstructing member 83, i.e. on the first sealing surface 83b and, as the second sealing surface 83c is resting against the second seat 81e, causes the overturning of the obstructing member 83 and the sealed closure of the second seat 81e. The overturning of the obstructing member 83 drives the movable support 84 towards the second seat 81e, against the action of the spring 85c which compresses, and the spring 85b which extends. As the circulation pump 7 is switched on, the pressure P1 of the water at the second port 3 associated with the heating circuit 22, 24 is greater than the pressure P2 of the water at the third port 4 associated with the circuit of the secondary heat exchanger 25. The arrows H in Figure 5 show the path of the water in the three-way valve 8, while the arrow R shows the overturning of the obstructing member 83 from the position indicated with the dashed line.

If the circulation pump 7 is then stopped, the pressure difference between the two circuits is canceled, and thus the movable support 84 returns to the equilibrium position due to the return force exerted by the springs 85b and 85c, and drives with it the obstructing members 83, returning the three-way valve 8 to the position shown in Figure 2.

The valve described above thus operates in a cyclical manner, reciprocatingly opening and closing the heating circuit 22, 24 and the secondary heat exchanger circuit 25.

The switching on and off of the circulation pump is controlled by a control unit (not shown) of the boiler B, according to the user's demands. Sensors, e.g. pressure, temperature or flow sensors, are normally associated respectively with the heating circuit 22, 24 and the circuit of the secondary heat exchanger 25 to detect the state of operation of the two circuits. By means of these sensors, the control unit of the boiler B is thus able to determine whether the switching state of the three-way valve 8 actually corresponds to the user's demand and, if it does not, to switch the circulation pump 7 on and off again to cause a further switching of the three-way valve. This may be achieved in a short time and in any event in line with the switching times of conventional motorized valves.

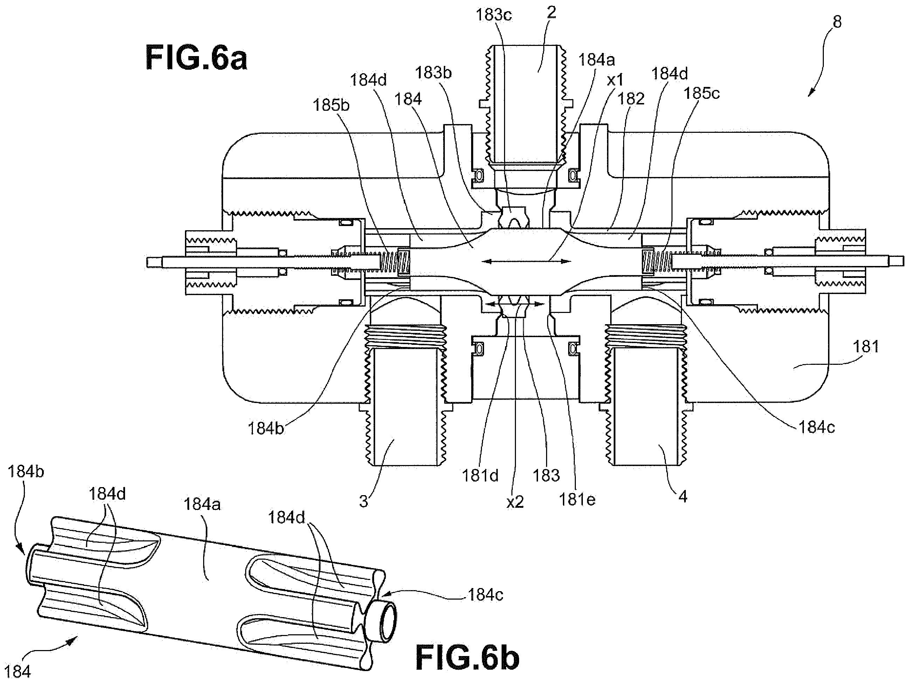

Reference is now made to a second embodiment of the three-way valve, represented in Figures 6a-6e.

This three-way valve 8 comprises a valve body 181, in which are obtained the first port (inlet port) 2, the second port (first outlet port) 3 and the third port (second outlet port) 4, all of which are connected to a switching chamber 182 obtained in the valve body 181.

Inside the switching chamber 182 there is arranged an obstructing member 183 that takes the form of a sliding ring, which in turn is carried by a movable support 184 made as a sliding shuttle inside the valve body 181. The direction of translation of the movable support is represented by the arrow x1 in Figure 6a, while the direction of translation of the obstructing member 183 is represented by the arrow x2. The obstructing member 183 has a first and second sealing surface 183b and 183c facing away from each other (i.e. facing in opposite and divergent directions), with respect to the directions of translation x1 and x2 of the movable support 184 and of the obstructing member 183. The obstructing member 183 is mounted around a cylindrical sliding surface 184a obtained in the middle part of the movable support 184 so that the obstructing member 183 is able to slide with respect to the movable support 184. At the opposite ends thereof, hereinafter referred to as the first and second end 184b and 184c, the movable support 184 has fluid passage channels 184d, which consist of recesses with respect to the circular profile of the cross-section of the movable support 184.

Between the ends 184b, 184c of the movable support 184 and the respective counterparts of the valve body 181 are interposed respective opposed elastic means 185b and 185c, which bias the movable support 84 towards an intermediate position or equilibrium position, represented in Figure 6a. In the example shown, the elastic means 185b and 185c are made as coil springs.

Inside the switching chamber 182 there are further obtained a first and a second opposed valve seat 181d and 181e, respectively interposed between the first port 2 and the second port 3, and between the first port 2 and the third port 4. The valve seats 181d and 181e are suitable to be engaged reciprocatingly by the first sealing surface 183b and by the second sealing surface 183c of the obstructing member 183, respectively. The first port 2 is oriented orthogonally to the axis that joins the valve seats 181d and 181e.

The valve in Figures 6a-6e has a cyclic operation similar to that of the valve in Figures 2-5.

In a rest position, with the circulation pump 7 in an off-state, the movable support 184 is in the intermediate or rest position, with the first sealing surface 183b of the obstructing member 183 engaged against the first seat 181d (Figure 6a). Thus, the first port 2 is in fluid communication with the third port 4, while the fluid communication between the first port 2 and the second port 3 is interrupted. As the circulation pump 7 is switched off, the pressure P1 of the water at the second port 3 associated with the heating circuit 22, 24 is equal to the pressure P2 of the water at the third port 4 associated with the circuit of the secondary heat exchanger 25.

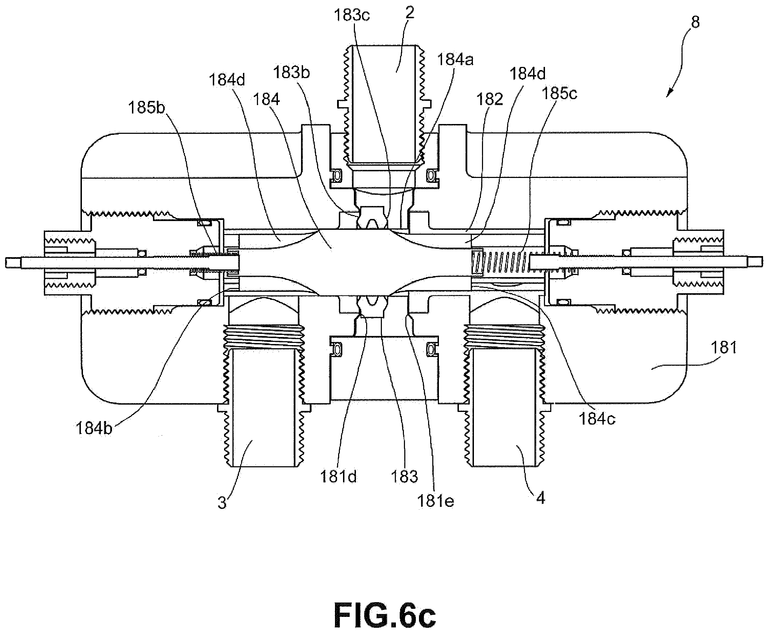

When the circulation pump 7 is switched on, the pressure produced by the circulation pump 7 at the first port 2 acts on the exposed surface of the movable support 184, i.e. on the second end 184c of the movable support 184 and, as the first sealing surface 183b of the obstructing member 183 is resting against the first seat 181d, causes the sliding of the movable support 184 with respect to the obstructing member 183 towards the first seat 181d (against the action of the spring 185b that compresses, and of the spring 185c that extends), and the sealed closure of the first seat 181d by the obstructing member (Figure 6c). As the circulation pump 7 is switched off, the pressure P2 of the water at the third port 4 associated with the circuit of the secondary heat exchanger 25 is greater than the pressure P1 of the water at the second port 3 associated with the heating circuit 22, 24.

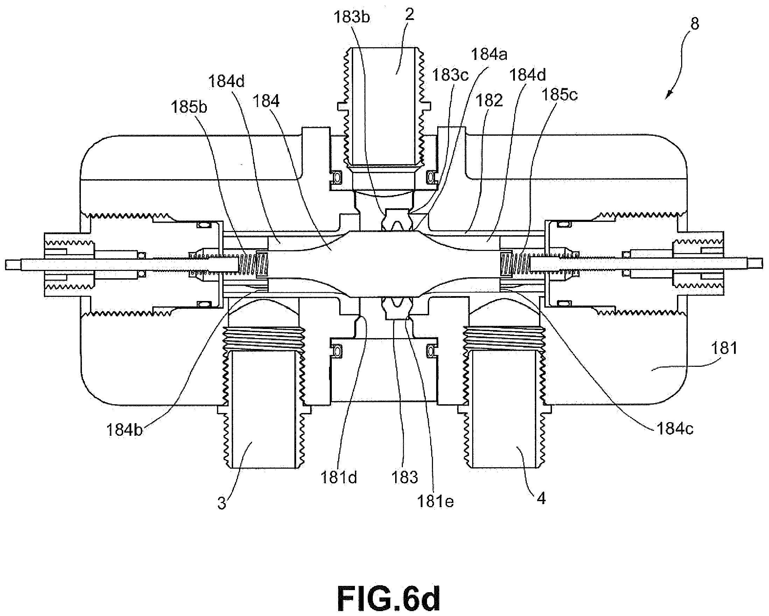

When the circulation pump 7 is again switched off, the pressure difference between the two circuits is canceled, and therefore the movable support 184 returns to the equilibrium position due to the return force exerted by the springs 185b and 185c. The movable support 184 drives with it the obstructing member 183, causing the second sealing surface 183c to engage against the second seat 181e. The obstructing member 183 thus interrupts the fluid communication between the first port 2 and the third port 4, i.e. interrupts the circuit of the secondary exchanger 25. A fluid communication is instead established between the first port 2 and the second port 3 (Figure 6d). As the circulation pump 7 is switched off, the pressure P1 of the water at the second port 3 associated with the heating circuit 22, 24 is equal to the pressure P2 of the water at the third port 4 associated with the circuit of the secondary heat exchanger 25.

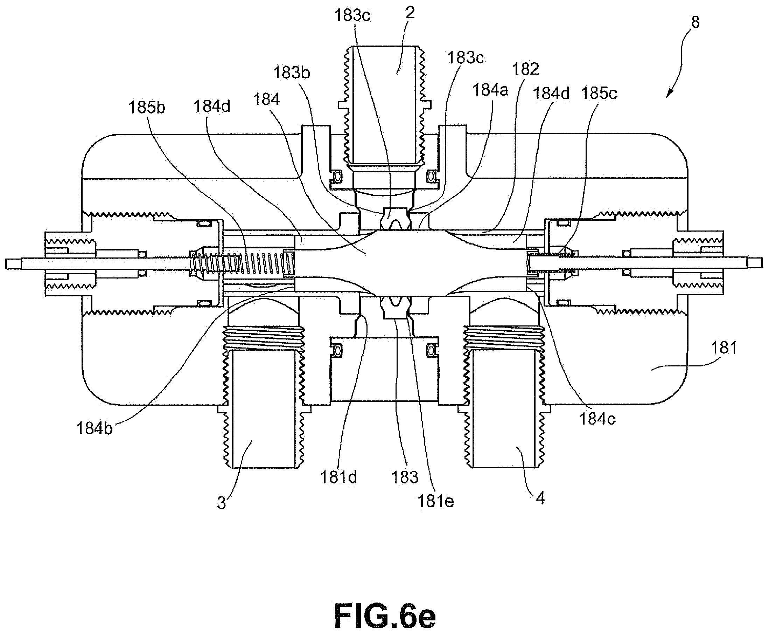

When the circulation pump 7 is switched on again, the pressure produced by the circulation pump 7 at the first port 2 acts on the exposed surface of the movable support 184, i.e. on the second end 184b of the movable support 184 and of the obstructing member 183, i.e. on the first sealing surface 183b and, as the second sealing surface 183c is resting against the second seat 181e, causes the sealed closure of the second seat 181e. Moreover, the action of the pressure on the first end 184b of the movable support 184 causes the movement of the movable support towards the second seat 181e, which slides with respect to the obstructing member 183, against the action of the spring 185c which compresses, and the spring 185b which extends (Figure 6e). As the circulation pump 7 is switched on, the pressure P1 of the water at the second port 3 associated with the heating circuit 22, 24 is greater than the pressure P2 of the water at the third port 4 associated with the circuit of the secondary heat exchanger 25.

If the circulation pump 7 is then stopped, the pressure difference between the two circuits is canceled, and thus the movable support 184 returns to the equilibrium position due to the return force exerted by the springs 185b and 185c, and drives with it the obstructing members 183, returning the three-way valve 8 to the initial position.

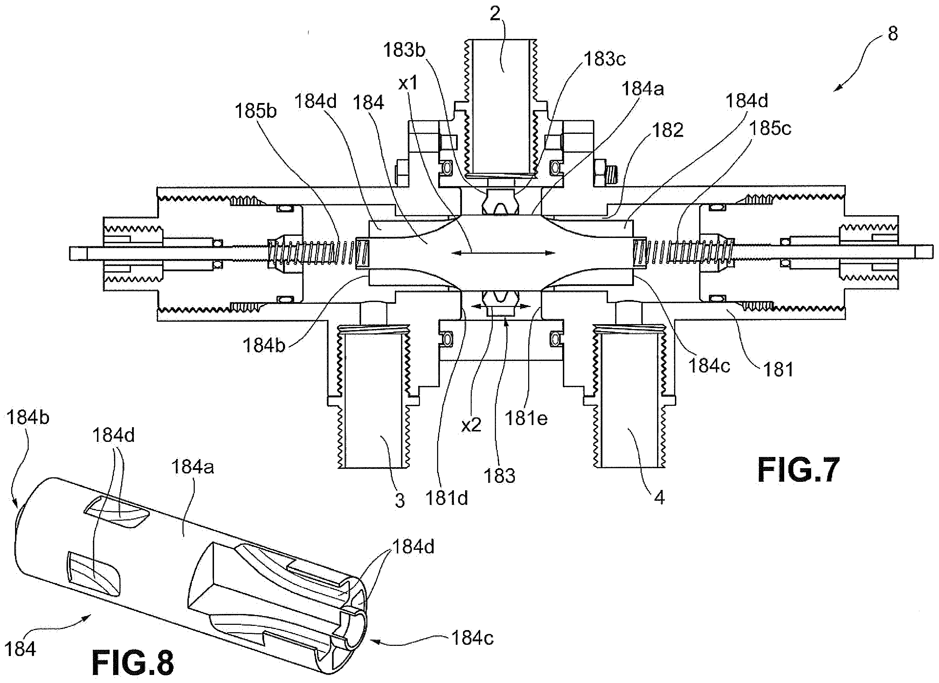

Figures 7 to 16 show different constructive variants of the valve in Figures 6a and 6b. The same reference numbers have been assigned to elements corresponding to those of this valve.

Figures 7 and 8 show a first variant, in which the fluid passage channels 184d at the ends 184b and 184c of the movable support 184 have an opening arranged completely within the circular profile of the cross-section of the movable support 184, which thus is not intersected by this opening. Note that in Figure 7 the obstructing element 183 is not represented in an actual operating position.

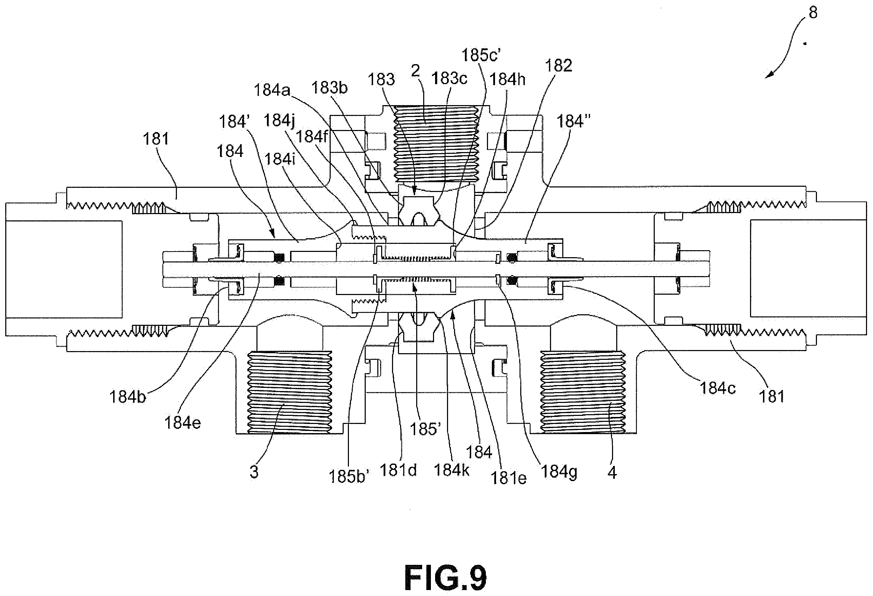

Figure 9 shows another variant, in which the elastic means are arranged inside the movable support 184. For this purpose, the movable support 184 is hollow and consists of two pieces 184' and 184" attached to each other. The movable support 184 is mounted in a sliding manner on a guide rod 184e attached to the valve body 181. The elastic means 185', in particular a single coiled spring, are mounted in a floating manner on the guide rod 184e, so that the opposite ends 185b' and 185c' of the elastic means are able to engage reciprocatingly stops 184f and 184g attached on the guide rod 184e, after the elastic means 185' are driven by opposing shoulders 184h and 184i obtained inside the movable support 184.

Another characteristic of the variant of Figure 9 is that at the opposing ends of the cylindrical sliding surface 184a of the movable support 184a are obtained respective stops 184j and 184k which are used to transfer an axial force to the obstructing member when the movable support 184 moves from the intermediate position to one or the other of the seats and also creates a higher pressure on the obstruction member 183 so that the leakage of fluid between the sealing surfaces 183b and 183c of the obstructing member and the valve seats 181d and 181e is reduced.

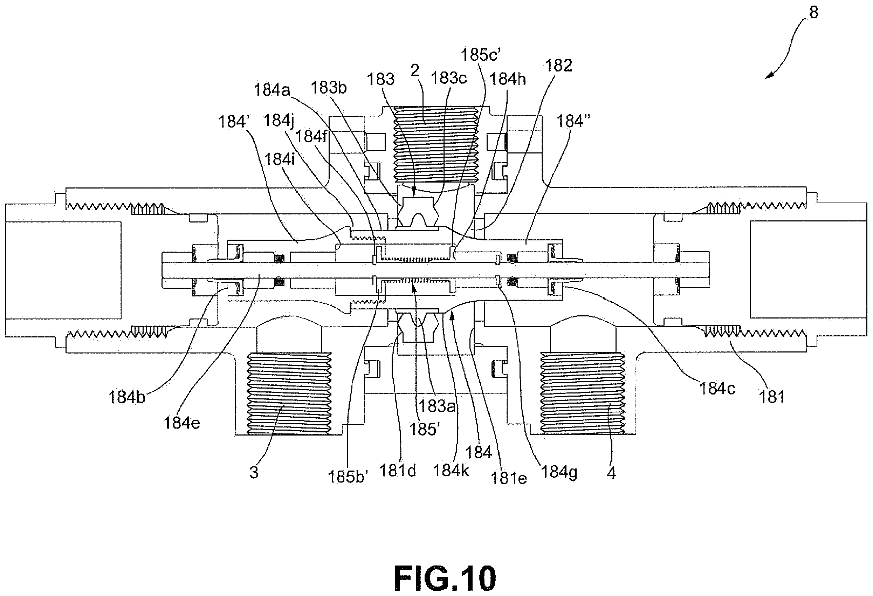

The variant of Figure 10 is almost identical to that of Figure 9, with the exception that the obstructing member 183 is mounted on an obstructing member support 183a, which is placed in contact with the cylindrical sliding surface 184a of the movable support 184. In this way, there is an additional degree of freedom in the design of the movable support/obstructing member group, since the material of the obstructing member support 183a may be selected according to the desired friction characteristics with respect to the cylindrical sliding surface 184a, without this creating any constraints with respect to the sealing characteristics of the obstructing member 183 with respect to the seats 181d and 181e.

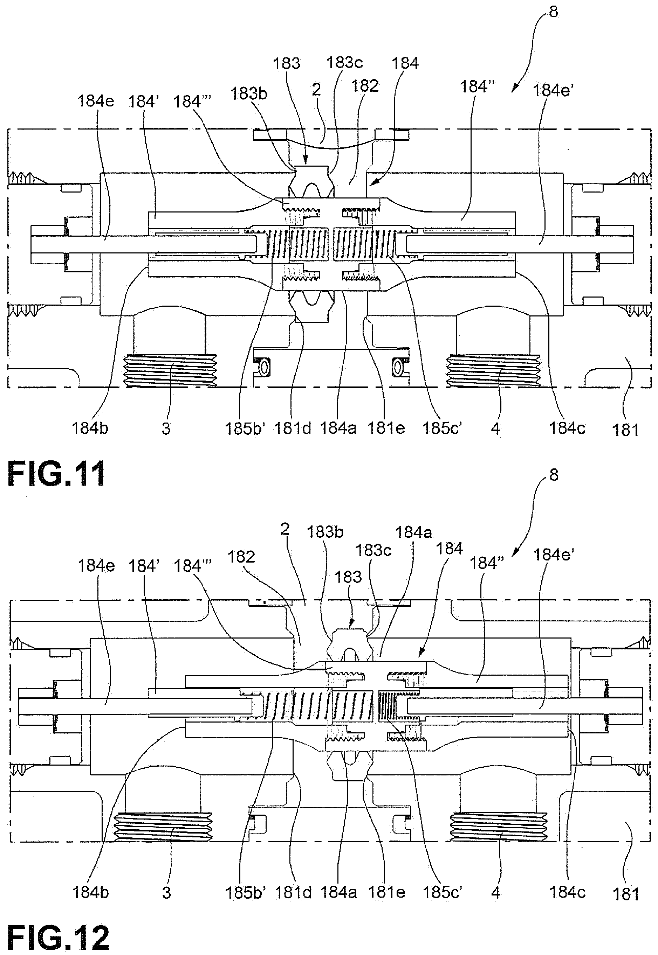

Figures 11-13 show another variant, in which the elastic means are again arranged inside the movable support 184. For this purpose, the movable support 184 is hollow and consists of two end pieces 184', 184" attached to an intermediate piece 184‴. The movable support 184 is slidably mounted on a pair of opposite guide rods 184e and 184e' attached to the valve body 181. The elastic means 185b' and 185c', in particular two coil springs, are each interposed between the intermediate piece 184‴ of the movable support 184 and an end of a respective guide rod 184e and 184e'.

The intermediate piece 184‴ of the movable support 184 bears the cylindrical sliding surface 184a. The material of the intermediate piece 184‴ of the movable support 184 may thus be selected according to the desired friction characteristics with the obstructing member 183 or with the obstructing member support, if this is used in the variant in Figures 11-13.

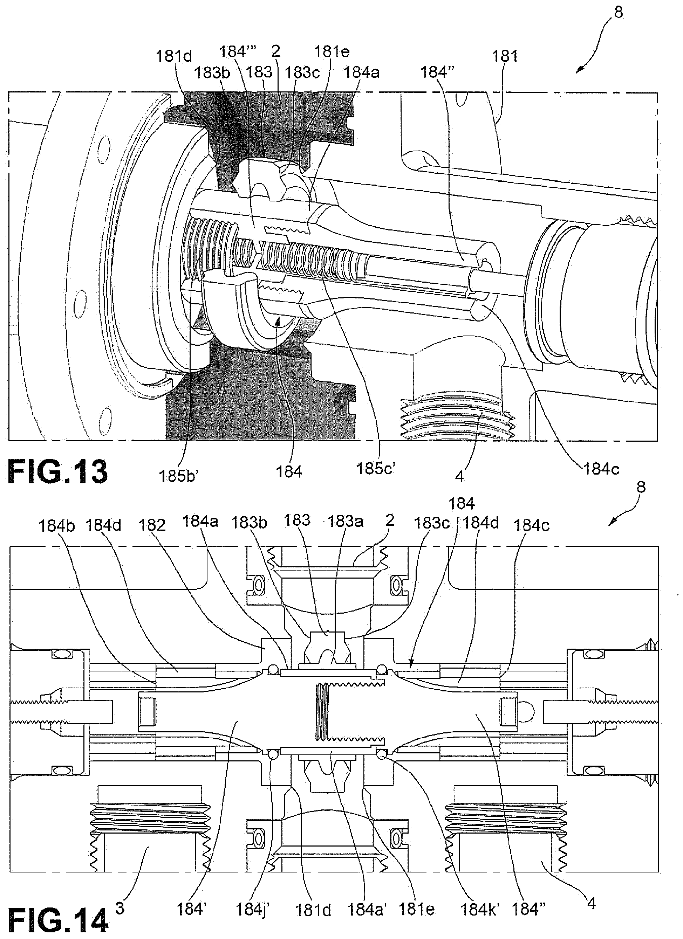

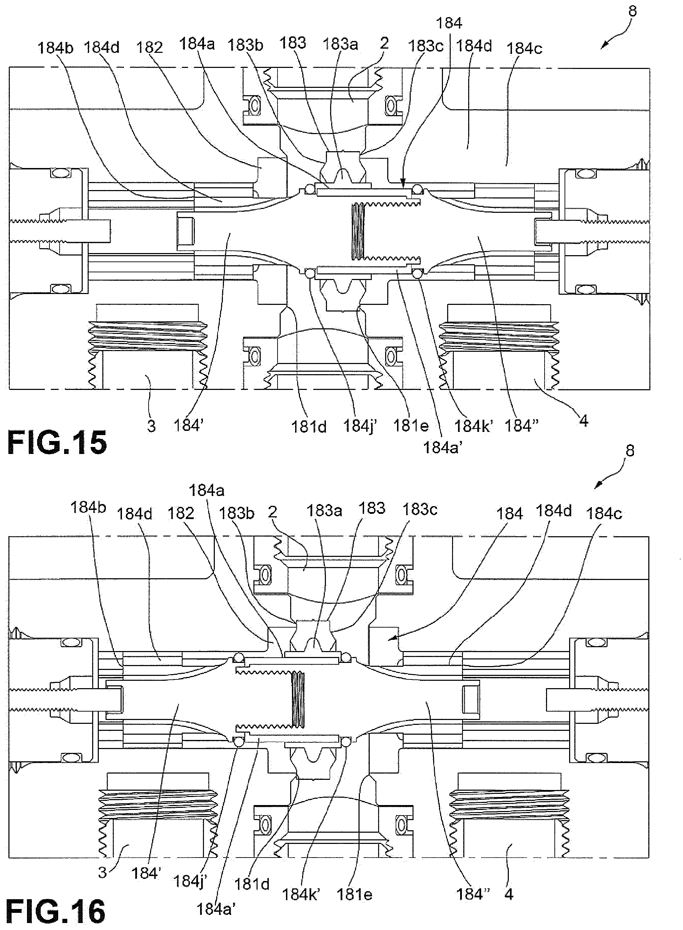

The variant in Figures 14-16 is substantially similar to that of Figures 6a-6b, but differs from this one in that the movable support 184 comprises two pieces 184' and 184" attached to each other. The cylindrical sliding surface 184a is obtained on a liner or sleeve 184a' formed or mounted on one of the two pieces 184' and 184" of the movable support 184. The variant in Figures 14 and 16 also has two rings or gaskets 184j' and 184k' mounted on the movable support 184 at the opposite ends of the cylindrical sliding surface 184a. These rings or gaskets 184j' and 184k' have a similar function to that of the stops 184j and 184k of the variants in Figures 9 and 10.

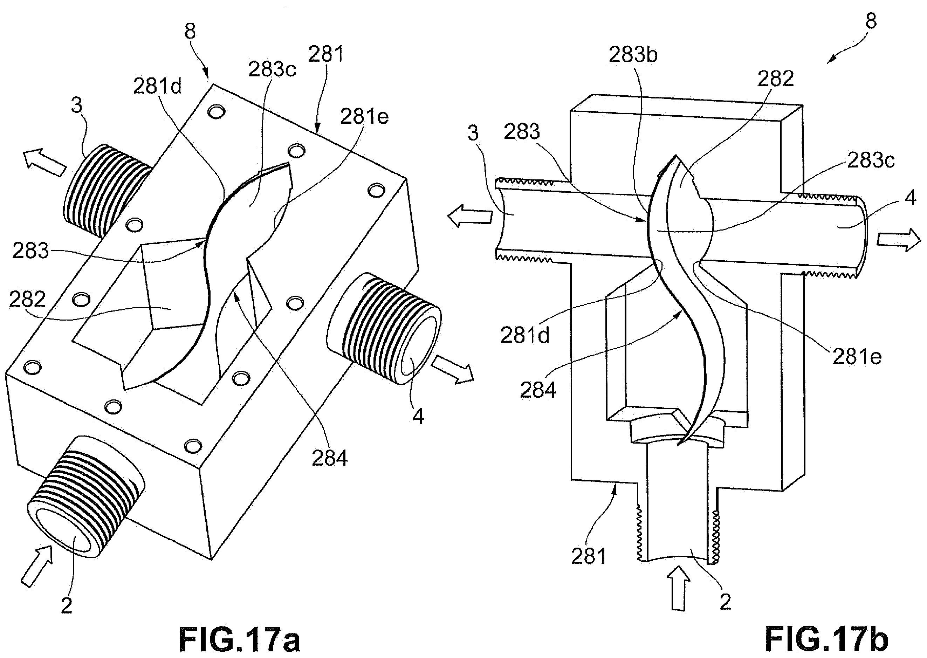

A three-way valve not being part of the invention is shown in Figures 17a and 17b.

This three-way valve 8 comprises a valve body 281, in which are obtained the first port (inlet port) 2, the second port (first outlet port) 3 and the third port (second outlet port) 4, all of which are connected to a switching chamber 282 located in the valve body 281. The second and third port 3, 4 are aligned with each other, while the first port 2 is oriented orthogonally to the axis connecting the second and third port.

Inside the switching chamber 282 there is arranged an S-shaped leaf 284 which, as will be clarified below, is functionally equivalent to the movable supports 84 and 184 of the preceding embodiments. The S-shaped leaf 284 has such a development because it is axially stressed between opposite ends of the switching chamber 282, arranged orthogonally to the direction of the axis connecting the second and third ports 3 and 4. A bend 283 of the S-shaped leaf forms a obstructing member similar to the obstructing members 83 and 183 of the preceding embodiments. The S-shaped leaf 284 and its bend 283 are capable of flexing reciprocatingly towards one or the other of said second and third ports 3 and 4. On the bend 283 of the S-shaped leaf 284 one may identify a first and a second sealing surface 283b and 283c facing away from each other (i.e. facing in opposite and divergent directions).

Inside the switching chamber 282 there are further obtained a first and a second opposed valve seat 281d and 281e, respectively interposed between the first port 2 and the second port 3, and between the first port 2 and the third port 4. The valve seats 281d and 281e are suitable to be engaged reciprocatingly by the first sealing surface 283b and by the second sealing surface 283c of the obstructing member/bend 283, respectively.

The obstructing member/bend 283 is capable of reversing the curvature and engaging one of the opposed seats 281d and 281e of the three-way valve 3, due to pressure, when the circulation pump passes from the off-state to the subsequent on-state passing through intermediate third states (symmetrical with each other) wherein, with a given curvature dictated by the switched-on configuration of the pump, with the subsequent shutdown of the pump, the leaf rests on the opposite valve seat (not shown). The next time the pump is switched on, due to the increase in pressure on the convex part of the leaf, there is a reversal of the curvature (change of concavity of the leaf) with the obstructing member/bend resting on the opposite valve seat. In other words, for its part, the leaf 284 is able to bring the obstructing member 283 into an intermediate position between the opposed seats 281d and 281e, due to the elastic force produced by the leaf itself, when the circulation pump goes from the on-state to the off-state.

The valve described above thus operates in a cyclical manner similar to the preceding embodiment, opening and closing the heating circuit 22, 24 and the secondary heat exchanger circuit 25 reciprocatingly.

Figures 17a and 17b show a single operating state with the pump switched on and fluid flowing from the port 2 to the port 4 of a valve not being part of the invention.

It is understood that the elements described in relation to only certain embodiments or variants may be combined, where compatible, with elements described in relation to other embodiments or variants.

## Claims

1. A hydraulic system (A) for an installation for heating and generating domestic hot water, which heating installation comprises a primary heat exchanger (21) for heating a water flow usable in a heating hydraulic circuit (22, 24), a secondary heat exchanger (25) for transferring heat from a water flow coming from the primary heat exchanger (21) to a domestic water flow and a circulation pump (7) for generating the water flow in the primary heat exchanger (21);
the hydraulic system (A) comprising a three-way valve (8), said three-way valve comprising a first port (2) for connection to the primary heat exchanger (21), a second port (3) and a third port (4) for connection to the heating circuit (22, 24) and to the secondary heat exchanger (25), respectively;
wherein said three-way valve (8) is switchable between at least two positions in which the first port (2) is selectively in fluid communication with the second port (3) or with the third port (4);
wherein said three-way valve comprises a movable support (84) and an obstructing member (83) carried by said movable support, at least one of which is responsive to pressure applied by the circulation pump (7) at the first port (2), at least one of said movable support and obstructing member being movable due to transitions between an off-state and an on-state of the circulation pump (7);
wherein the hydraulic system (A) is **characterized in that**
the three-way valve (8) further comprises return means (85b, 85c) associated with the movable support (84) and producing an elastic force to bias the movable support (84) towards an intermediate position between the opposed seats (81d, 81e) of the three-way valve, wherein said intermediate position is associated with the off-state of the circulation pump (7);
wherein the obstructing member (83) comprises a pair of sealing surfaces (83b, 83c) facing away from each other and adapted to engage reciprocatingly respective opposed seats (81d, 81e) of the three-way valve (8) interposed between the first port (2) and the second port (3), and between the first port (2) and the third port (4), respectively;
wherein, when the obstructing member (83) is engaged against one of said opposed seats (81d, 81e) of the three-way valve (8), hereinafter engaged seat, said movable support is movable towards said engaged seat, against the action of said elastic force, due to pressure when the circulation pump (7) switches from the off-state to the on-state; and
wherein said movable support is capable of driving the obstructing member (83) from said engaged seat to the other of said opposed seats (81d, 81e) of the three-way valve (8) due to said elastic force when the circulation pump (7) switches from the on-state to the off-state,
and
the movable support (84) is slidably arranged between the opposed seats (81d, 81e) of the three-way valve (8) and the obstructing member (83) is formed as a flexible conical ring arranged around the movable support (84).

2. A system according to claim 1, wherein, when the obstructing member (83) is engaged against one of said opposed seats (81d, 81e) of the three-way valve (8), said obstructing member is capable of overturning due to pressure when the circulation pump (7) switches from the off-state to the on-state, as well as driving said movable support towards said seat against the action of said elastic force.

3. A hydraulic system (A) for an installation for heating and generating domestic hot water, which heating installation comprises a primary heat exchanger (21) for heating a water flow usable in a heating hydraulic circuit (22, 24), a secondary heat exchanger (25) for transferring heat from a water flow coming from the primary heat exchanger (21) to a domestic water flow and a circulation pump (7) for generating the water flow in the primary heat exchanger (21);
the hydraulic system (A) comprising a three-way valve (8), said three-way valve comprising a first port (2) for connection to the primary heat exchanger (21), a second port (3) and a third port (4) for connection to the heating circuit (22, 24) and to the secondary heat exchanger (25), respectively;
wherein said three-way valve (8) is switchable between at least two positions in which the first port (2) is selectively in fluid communication with the second port (3) or with the third port (4);
wherein said three-way valve comprises a movable support (184) and an obstructing member (183) carried by said movable support, at least one of which is responsive to pressure applied by the circulation pump (7) at the first port (2), at least one of said movable support and obstructing member being movable due to transitions between an off-state and an on-state of the circulation pump (7);
wherein the hydraulic system (A) is **characterized in that**
the three-way valve (8) further comprises return means (185b, 185c; 185'; 185b', 185c') associated with the movable support (184) and producing an elastic force to bias the movable support (184) towards an intermediate position between the opposed seats (181d, 181e) of the three-way valve, wherein said intermediate position is associated with the off-state of the circulation pump (7);
wherein the obstructing member (183) comprises a pair of sealing surfaces (183b, 183c) facing away from each other and adapted to engage reciprocatingly respective opposed seats (181d, 181e) of the three-way valve (8) interposed between the first port (2) and the second port (3), and between the first port (2) and the third port (4), respectively;
wherein, when the obstructing member (183) is engaged against one of said opposed seats (181d, 181e) of the three-way valve (8), hereinafter engaged seat, said movable support is movable towards said engaged seat, against the action of said elastic force, due to pressure when the circulation pump (7) switches from the off-state to the on-state; and
wherein said movable support is capable of driving the obstructing member (183) from said engaged seat to the other of said opposed seats (181d, 181e) of the three-way valve (8) due to said elastic force when the circulation pump (7) switches from the on-state to the off-state,
and
the movable support (184) is slidably arranged between the opposed seats (181d, 181e) of the three-way valve (8) and the obstructing member (183) is formed as a ring arranged around the movable support (184) and slidable relative to the movable support.

4. A system according to claim 3, wherein, when the obstructing member (183) is engaged against one of said opposed seats (181d, 181e) of the three-way valve (8), said movable support is capable of moving due to pressure towards said seat and relative to the obstructing member (184), against the action of said elastic force, when the circulation pump (7) switches from the off-state to the on-state.

5. A system according to any of the preceding claims, wherein said three-way valve (8) and said circulation pump (7) are assembled into a single body.

## Patentansprüche

1. Hydrauliksystem (A) für eine Anlage zur Heizung und Warmwasserversorgung für Haushalte, welche Wärmeanlage einen primären Wärmetauscher (21) zum Erwärmen eines in einem hydraulischen Wärmekreis (22, 24) nutzbaren Wasserflusses, einen zweiten Wärmetauscher (25) zur Übertragung von Wärme von einem Wasserfluss, der von dem primären Wärmetauscher (21) ausgeht, zu einem haushaltsseitigen Wasserstrom, und einer Zirkulationspumpe (7) umfasst, um die Wasserströmung in dem primären Wärmetauscher (21) zu erzeugen;
wobei das hydraulische System (A) ein Dreiwegeventil (8) aufweist, und das Dreiwegeventil einen ersten Anschluss (2) zur Verbindung mit dem primären Wärmetauscher (21), einen zweiten Anschluss (3) und einen dritten Anschluss (4) aufweist, jeweilig für die Verbindung zu dem Wärmekreis (22, 24) und zu dem zweiten Wärmetauscher (25);
wobei das Dreiwegeventil (8) zwischen wenigstens zwei Stellungen schaltbar ist, in denen der erste Anschluss (2) selektiv in Fluidkombination mit dem zweiten Anschluss (3) oder dem dritten Anschluss (4) ist;
wobei das Dreiwegeventil einen beweglichen Träger (84) und ein von dem beweglichen Träger getragenes Sperrteil (83) aufweist, von denen wenigstens eines auf Druck anspricht, der durch die Zirkulationspumpe (7) an dem ersten Anschluss (2) anliegt, wobei wenigstens eines von dem beweglichen Träger und dem Sperrteil aufgrund von Übergängen zwischen einem AUS-Zustand und einem AN-Zustand der Zirkulationspumpe (7) beweglich ist;
wobei das Hydrauliksystem (A) **dadurch gekennzeichnet ist, dass**
das Dreiwegeventil (8) weiter eine Rückkehreinrichtung (85b, 85c) aufweist, die dem beweglichen Träger (84) zugeordnet ist und eine elastische Kraft erzeugt, um den beweglichen Träger (84) in Richtung auf eine Zwischenstellung zwischen den gegenüberliegenden Sitzen (81d, 81e) des Dreiwegeventils vorzuspannen, wobei diese Zwischenposition dem AUS-Zustand der Zirkulationspumpe (7) zugeordnet ist;
wobei das Sperrteil (83) ein Paar von Abdichtflächen (83b, 83c) voneinander weggerichtet aufweist und dazu ausgelegt ist, in reziproker Weise mit gegenüberliegenden Sitzen (81d, 81e) des Dreiwegeventils (8) in Eingriff gebracht zu werden, jeweilig zwischengesetzt zwischen dem ersten Anschluss (2) und dem zweiten Anschluss (3), und zwischen dem ersten Anschluss (2) und dem dritten Anschluss (4),
wobei, wenn das Sperrteil (83) gegen einen der gegenüberliegenden Sitze (81d, 81e) des Dreiwegeventils (8) im Eingriff ist, hiernach als Eingriffssitz bezeichnet, der bewegliche Träger aufgrund des Drucks beim Schalten der Zirkulationspumpe (7) von dem AUS-Zustand in den AN-Zustand entgegen der Wirkung der elastischen Kraft in Richtung auf den Eingriffssitz beweglich ist, und
wobei der bewegliche Support aufgrund der elastischen Kraft beim Schalten der Zirkulationspumpe (7) von dem AN-Zustand in den AUS-Zustand befähigt ist, das Sperrteil (83) von dem Eingriffssitz zu dem anderen der gegenüberliegenden Sitze (81d, 81e) des Dreiwegeventils (8) zu verfahren
und der bewegliche Träger (84) zwischen den gegenüberliegenden Sitzen (81d, 81e) des Dreiwegeventils (8) gleitbar angeordnet ist und das Sperrteil (83) als ein flexibler konischer Ring gebildet ist, der um den beweglichen Träger (84) angeordnet ist.

2. System nach Anspruch 1, bei dem, wenn das Sperrteil (83) gegen einen der gegenüberliegenden Sitze (81d, 81e) des Dreiwegeventils (8) in Eingriff ist, das Sperrteil befähigt ist, aufgrund des Drucks beim Schalten der Zirkulationspumpe (7) von dem AUS-Zustand in den AN-Zustand zu kippen wie auch den beweglichen Träger gegen die Wirkung der elastischen Kraft gegen diesen Sitz zu fahren.

3. Hydrauliksystem (A) für eine Anlage zur Heizung und Warmwasserversorgung für Haushalte, welche Wärmeanlage einen primären Wärmetauscher (21) zum Erwärmen eines in einem hydraulischen Wärmekreis (22, 24) nutzbaren Wasserflusses, einen zweiten Wärmetauscher (25) zur Übertragung von Wärme von einem Wasserfluss, der von dem primären Wärmetauscher (21) ausgeht, zu einem haushaltsseitigen Wasserstrom, und einer Zirkulationspumpe (7) umfasst, um die Wasserströmung in dem primären Wärmetauscher (21) zu erzeugen;
wobei das hydraulische System (A) ein Dreiwegeventil (8) aufweist, und das Dreiwegeventil einen ersten Anschluss (2) zur Verbindung mit dem primären Wärmetauscher (21), einen zweiten Anschluss (3) und einen dritten Anschluss (4) aufweist, jeweilig für die Verbindung zu dem Wärmekreis (22, 24) und zu dem zweiten Wärmetauscher (25);
wobei das Dreiwegeventil (8) zwischen wenigstens zwei Stellungen schaltbar ist, in denen der erste Anschluss (2) selektiv in Fluidkombination mit dem zweiten Anschluss (3) oder dem dritten Anschluss (4) ist;
wobei das Dreiwegeventil einen beweglichen Träger (184) und ein von dem beweglichen Träger getragenes Sperrteil (183) aufweist, von denen wenigstens eines auf Druck anspricht, der durch die Zirkulationspumpe (7) an dem ersten Anschluss (2) anliegt, wobei wenigstens eines von dem beweglichen Träger und dem Sperrteil aufgrund von Übergängen zwischen einem AUS-Zustand und einem AN-Zustand der Zirkulationspumpe (7) beweglich ist;
wobei das Hydrauliksystem (A) **dadurch gekennzeichnet ist, dass**
das Dreiwegeventil (8) weiter eine Rückkehreinrichtung (185b, 185c; 185'; 185b', 185c') aufweist, die dem beweglichen Träger (184) zugeordnet ist und eine elastische Kraft erzeugt, um den beweglichen Träger (184) in Richtung auf eine Zwischenstellung zwischen den gegenüberliegenden Sitzen (181d, 181e) des Dreiwegeventils vorzuspannen, wobei diese Zwischenposition dem AUS-Zustand der Zirkulationspumpe (7) zugeordnet ist;
wobei das Sperrteil (183) ein Paar von Abdichtflächen (183b, 183c) voneinander weggerichtet aufweist und dazu ausgelegt ist, in reziproker Weise mit gegenüberliegenden Sitzen (181d, 181e) des Dreiwegeventils (8) in Eingriff gebracht zu werden, jeweilig zwischengesetzt zwischen dem ersten Anschluss (2) und dem zweiten Anschluss (3), und zwischen dem ersten Anschluss (2) und dem dritten Anschluss (4),
wobei, wenn das Sperrteil (183) gegen einen der gegenüberliegenden Sitze (181d, 181e) des Dreiwegeventils (8) im Eingriff ist, hiernach als Eingriffssitz bezeichnet, der bewegliche Träger aufgrund des Drucks beim Schalten der Zirkulationspumpe (7) von dem AUS-Zustand in den AN-Zustand entgegen der Wirkung der elastischen Kraft in Richtung auf den Eingriffssitz beweglich ist, und
wobei der bewegliche Support aufgrund der elastischen Kraft beim Schalten der Zirkulationspumpe (7) von dem AN-Zustand in den AUS-Zustand befähigt ist, das Sperrteil (183) von dem Eingriffssitz zu dem anderen der gegenüberliegenden Sitze (181d, 181e) des Dreiwegeventils (8) zu verfahren
und der bewegliche Träger (184) zwischen den gegenüberliegenden Sitzen (181d, 181e) des Dreiwegeventils (8) gleitbar angeordnet ist und das Sperrteil (183) als ein Ring gebildet ist, der um den beweglichen Träger (184) angeordnet ist und relativ zu dem beweglichen Träger gleiten kann.

4. System nach Anspruch 3, bei dem, wenn das Sperrteil (183) gegen einen der gegenüberliegenden Sitze (181d, 181e) des Dreiwegeventils (8) in Eingriff ist, der bewegliche Träger befähigt ist, sich aufgrund des Drucks in Richtung auf diesen Sitz und relativ zum Sperrteil (184) gegen die Wirkung der elastischen Kraft zu bewegen, wenn die Zirkulationspumpe (7) von dem AUS-Zustand in den AN-Zustand schaltet.

5. System nach einem der vorhergehenden Ansprüche, bei dem das Dreiwegeventil (8) und die Zirkulationspumpe (7) in einem einzelnen Körper montiert sind.

## Revendications

1. Système hydraulique (A) pour installation de chauffage et de production d'eau chaude domestique, laquelle installation de chauffage comprend un échangeur de chaleur principal (21) permettant de chauffer un flux d'eau utilisable dans un circuit hydraulique de chauffage (22, 24), un échangeur de chaleur secondaire (25) permettant de transférer de la chaleur d'un flux d'eau provenant de l'échangeur de chaleur principal (21) vers un flux d'eau domestique, et une pompe de circulation (7) permettant de générer le flux d'eau dans l'échangeur de chaleur principal (21) ;
le système hydraulique (A) comprenant une vanne à trois voies (8), ladite vanne à trois voies comprenant un premier orifice (2) pour connexion à l'échangeur de chaleur principal (21), un deuxième orifice (3) et un troisième orifice (4) pour connexion au circuit de chauffage (22, 24) et à l'échangeur de chaleur secondaire (25), respectivement ;
dans lequel ladite vanne à trois voies (8) est commutable entre au moins deux positions dans lesquelles le premier orifice (2) est sélectivement en communication fluidique avec le deuxième orifice (3) ou avec le troisième orifice (4) ;
dans lequel ladite vanne à trois voies comprend un support mobile (84) et un élément d'obstruction (83) porté par ledit support mobile, dont au moins un est réactif à la pression appliquée par la pompe de circulation (7) au niveau du premier orifice (2), au moins un élément parmi ledit support mobile et l'élément d'obstruction étant mobile en raison de passages entre un état désactivé et un état activé de la pompe de circulation (7) ;
dans lequel le système hydraulique (A) est **caractérisé en ce que** la vanne à trois voies (8) comprend en outre un moyen de retour (85b, 85c) associé au support mobile (84) et produisant une force élastique pour solliciter le support mobile (84) vers une position intermédiaire entre les sièges opposés (81d, 81e) de la vanne à trois voies, ladite position intermédiaire étant associée à l'état désactivé de la pompe de circulation (7) ;
dans lequel l'élément d'obstruction (83) comprend une paire de surfaces d'étanchéité (83b, 83c) orientées de manière opposée l'une à l'autre et adaptées pour venir en prise alternativement avec des sièges opposés (81d, 81e) respectifs de la vanne à trois voies (8) interposés entre le premier orifice (2) et le deuxième orifice (3), et entre le premier orifice (2) et le troisième orifice (4), respectivement ;
dans lequel, lorsque l'élément d'obstruction (83) est en prise avec l'un desdits sièges opposés (81d, 81e) de la vanne à trois voies (8), ci-après le siège en prise, ledit support mobile est mobile vers ledit siège en prise, contre l'action de ladite force élastique, en raison de la pression lorsque la pompe de circulation (7) passe de l'état désactivé à l'état activé ; et
dans lequel ledit support mobile est capable d'entraîner l'élément d'obstruction (83) dudit siège en prise vers l'autre desdits sièges en prise (81d, 81e) de la vanne à trois voies (8) en raison de ladite force élastique lorsque la pompe de circulation (7) passe de l'état activé à l'état désactivé, et
le support mobile (84) est agencé de façon à coulisser entre les sièges opposés (81d, 81e) de la vanne à trois voies (8) et l'élément d'obstruction (83) est formé comme une bague conique flexible agencée autour du support mobile (84).

2. Système selon la revendication 1, dans lequel, lorsque l'élément d'obstruction (83) est en prise avec l'un desdits sièges opposés (81d, 81e) de la vanne à trois voies (8), ledit élément d'obstruction est capable de s'inverser en raison de la pression lorsque la pompe de circulation (7) passe de l'état désactivé à l'état activé, ainsi que d'entraîner ledit support mobile vers ledit siège contre l'action de ladite force élastique.

3. Système hydraulique (A) pour installation de chauffage et de production d'eau chaude domestique, laquelle installation de chauffage comprend un échangeur de chaleur principal (21) permettant de chauffer un flux d'eau utilisable dans un circuit hydraulique de chauffage (22, 24), un échangeur de chaleur secondaire (25) permettant de transférer de la chaleur d'un flux d'eau provenant de l'échangeur de chaleur principal (21) vers un flux d'eau domestique, et une pompe de circulation (7) permettant de générer le flux d'eau dans l'échangeur de chaleur principal (21) ;
le système hydraulique (A) comprenant une vanne à trois voies (8), ladite vanne à trois voies comprenant un premier orifice (2) pour connexion à l'échangeur de chaleur principal (21), un deuxième orifice (3) et un troisième orifice (4) pour connexion au circuit de chauffage (22, 24) et à l'échangeur de chaleur secondaire (25), respectivement ;
dans lequel ladite vanne à trois voies (8) est commutable entre au moins deux positions dans lesquelles le premier orifice (2) est sélectivement en communication fluidique avec le deuxième orifice (3) ou avec le troisième orifice (4) ;
dans lequel ladite vanne à trois voies comprend un support mobile (184) et un élément d'obstruction (183) supporté par ledit support mobile, dont au moins un est réactif à la pression appliquée par la pompe de circulation (7) au niveau du premier orifice (2), au moins un élément parmi ledit support mobile et l'élément d'obstruction étant mobile en raison de passages entre un état désactivé et un état activé de la pompe de circulation (7) ;
dans lequel le système hydraulique (A) est **caractérisé en ce que** la vanne à trois voies (8) comprend en outre un moyen de retour (185b, 185c ; 185' ; 185b', 185c') associé au support mobile (184) et produisant une force élastique pour solliciter le support mobile (184) vers une position intermédiaire entre les sièges opposés (181d, 181e) de la vanne à trois voies, ladite position intermédiaire étant associée à l'état désactivé de la pompe de circulation (7) ;
dans lequel l'élément d'obstruction (183) comprend une paire de surfaces d'étanchéité (183b, 183c) orientées de manière opposée l'une à l'autre et adaptées pour venir en prise alternativement avec des sièges opposés (181d, 181e) respectifs de la vanne à trois voies (8) interposés entre le premier orifice (2) et le deuxième orifice (3), et entre le premier orifice (2) et le troisième orifice (4), respectivement ;
dans lequel, lorsque l'élément d'obstruction (183) est en prise avec l'un desdits sièges opposés (181d, 181e) de la vanne à trois voies (8), ci-après le siège en prise, ledit support mobile est mobile vers ledit siège en prise, contre l'action de ladite force élastique, en raison de la pression lorsque la pompe de circulation (7) passe de l'état désactivé à l'état activé ; et
dans lequel ledit support mobile est capable d'entraîner ledit élément d'obstruction (183) dudit siège en prise vers l'autre desdits sièges en prise (181d, 181e) de la vanne à trois voies (8) en raison de ladite force élastique lorsque la pompe de circulation (7) passe de l'état activé à l'état désactivé, et
le support mobile (184) est agencé de façon à coulisser entre les sièges opposés (181d, 181e) de la vanne à trois voies (8), et l'élément d'obstruction (183) est formé comme une bague agencée autour du support mobile (184) et coulissante par rapport au support mobile.

4. Système selon la revendication 3, dans lequel, lorsque l'élément d'obstruction (183) est en prise avec un desdits sièges opposés (181d, 181e) de la vanne à trois voies (8), ledit support mobile est capable de se déplacer en raison de la pression vers ledit siège et par rapport à l'élément d'obstruction (184), contre l'action de ladite force élastique, lorsque la pompe de circulation (7) passe de l'état désactivé à l'état activé.

5. Système selon l'une quelconque des revendications précédentes, dans lequel ladite vanne à trois voies (8) et ladite pompe de circulation (7) sont assemblées en un corps unique.
